# EUROPEAN PATENT SPECIFICATION

(11) **EP 1 135 774 B1**
(45) Date of publication and mention of the grant of the patent: **30.07.2003**
(21) Application number: 00960693.0
(22) Date of filing: 27.09.2000
(51) Int. Cl.: G11B 7/24

(54) **OPTICAL RECORDING MEDIUM COMPRISING A GESBTE RECORDING LAYER**
OPTISCHES AUFZEICHNUNGSMEDIUM MIT GESBTE-AUFZEICHNUNGSSCHICHT
SUPPORT D'ENREGISTREMENT OPTIQUE A COUCHE D'ENREGISTREMENT DE GE-SB-TE

(30) Priority: 04.10.1999 EP 99203239
(43) Date of publication of application: 26.09.2001
(73) Proprietor: Koninklijke Philips Electronics N.V., 5621 BA Eindhoven (NL)
(72) Inventor: ZHOU, Guo-Fu, NL-5656 AA Eindhoven (NL); JACOBS, Bernardus, A., J., NL-5656 AA Eindhoven (NL)
(74) Representative: Deguelle, Wilhelmus Hendrikus Gerardus
(86) International application number: EP0009501
(87) International publication number: WO01026106

(56) References cited:
- WO-A-97/50084
- WO-A-98/28738
- US-A- 5 289 453
- PATENT ABSTRACTS OF JAPAN vol. 013, no. 341 (P-907), 31 July 1989 (1989-07-31) & JP 01 100745 A (TOSHIBA CORP), 19 April 1989 (1989-04-19)

## Description

The invention relates to a rewritable optical information medium for high-speed recording by means of a laser-light beam, said medium comprising a substrate carrying a stack of layers, which stack comprises, in this order, a first dielectric layer, a recording layer of a phase-change material comprising an alloy consisting of Ge, Sb and Te, a second dielectric layer and a metal mirror layer.

The invention also relates to the use of such an optical recording medium in high storage density and high data rate applications.

Optical information or data storage based on the phase change principle is attractive, because it combines the possibilities of direct overwrite (DOW) and high storage density with easy compatibility with read-only systems. Phase-change optical recording involves the formation of submicrometer-sized amorphous recording marks in a thin crystalline film using a focused laser-light beam. During recording information, the medium is moved with respect to the focused laser-light beam which is modulated in accordance with the information to be recorded. Due to this, quenching takes place in the phase-change recording layer and causes the formation of amorphous information bits in the exposed areas of the recording layer which remains crystalline in the unexposed areas. Erasure of written amorphous marks is realized by recrystallizing through heating with the same laser. The amorphous marks represent the data bits, which can be reproduced via the substrate by a low-power focused laser-light beam. Reflection differences of the amorphous marks with respect to the crystalline recording layer bring about a modulated laser-light beam which is subsequently converted by a detector into a modulated photocurrent in accordance with the coded, recorded digital information.

One of the most important demands in phase-change optical recording is a high data rate. A high data rate requires the recording layer to have a high crystallization rate, i.e. a short crystallization time. To ensure that the previously recorded amorphous marks can be crystallized during direct overwrite, the recording layer should have a proper crystallization time to match the linear velocity of the medium relative to the laser-light beam. If the crystallization speed is not high enough to match the linear velocity of the medium relative to the laser-light beam, the old data (amorphous marks) from the previous recording cannot be completely erased (recrystallized) during DOW. This will cause a high noise level. A high crystallization speed is particularly required in high-density recording and high data rate applications, such as disc-shaped DVD+RW, DVR-red and blue and CD-RW, where the complete erasure time (CET) has to be shorter than circa 50 ns. For DVD+RW, which has a 4.7 GB recording density per 120 mm disk, a user data bit rate of 33 Mbits/s is needed, and for DVR-red said rate is 35 Mbits/s. For rewritable phase change optical recording systems such as DVR-blue (digital video recording operated with a blue laser-light beam), a user data rate higher than 50 Mbits/s is required.

An optical information medium of the type mentioned in the opening paragraph is known from United States patent US 5,191,565. The known medium of the phase-change type comprises a disc-shaped substrate carrying a stack of layers consisting, in succession, of a first dielectric layer, a recording layer of a phase-change Ge-Sb-Te alloy, a second dielectric layer and a metal reflective layer. Such a stack of layers can be referred to as an IPIM-structure, wherein M represents a reflective or mirror layer, I represents a dielectric layer and P represents a phase-change recording layer. Said patent discloses in the ternary composition diagram (Figure 5) a locus of 70 ns pulse times around the stoichiometric compound Ge₂Sb₂Te₅, at which pulse time the Ge-Sb-Te compositions begin to crystallize. This time is not equal to the complete erase time CET, but shorter. The complete erase time CET is defined as the minimum duration of the erasing pulse for complete crystallization of a written amorphous mark in a crystalline environment, which is measured statically. For complete erasure of an amorphous mark, two processes are necessary, i.e. nucleation and grain (crystallite) growth. The time mentioned in said patent is the nucleation time, i.e. the time that the first crystallites can be observed. Complete erasure, i.e. complete crystallization of the amorphous mark, takes some additional ten or more nanoseconds. Said patent teaches that compositions on the GeTe-Sb₂Te₃ tie-line in the ternary diagram crystallize more quickly. E.g. the stoichiometric compound Ge₂Sb₂Te₅ (Ge_{22.2}Sb_{22.2}Te_{55.6}, in atomic percentages) is indicated to have a nucleation time of 50 ns. Experiments by the current Applicant show that this compound has a CET-value of 53 ns.

It is an object of the invention to provide, *inter alia,* a rewritable optical information medium which is suitable for high speed optical recording, such as DVD-RAM and optical tape, having a CET-value of 50 ns or shorter. High-speed recording is to be understood to mean in this context a linear velocity of the medium relative to the laser-light beam of at least 7.2 m/s, which is six times the speed according to the Compact Disc standard.

These objects are achieved in accordance with the invention by an optical information medium as described in the opening paragraph, which is characterized in that the recording layer comprises an alloy with a composition defined by an area in the ternary composition diagram Ge-Sb-Te, in atomic percentages, said area being of pentagonal shape having the following vertices:

Ge_{24.6}Sb_{20.2}Te_{55.2} (A)

Ge_{23.5}Sb_{19.2}Te_{57.3} (B)

Ge_{20.5}Sb_{20.5}Te_{59.0} (C)

Ge_{18.8}Sb_{22.6}Te_{58.6} (D)

Ge_{20.1}Sb_{23.7}Te_{56.2} (E);

- the first dielectric layer having a thickness of 70 to (70+λ/2n) nm, wherein λ is the wavelength of the laser-light beam, and n is the refractive index of this layer;
- the recording layer having a thickness of 10 to 35 nm;
- the second dielectric layer having a thickness of 10 to 50 nm;
- the metal mirror layer having a thickness of 60 to 160 nm.

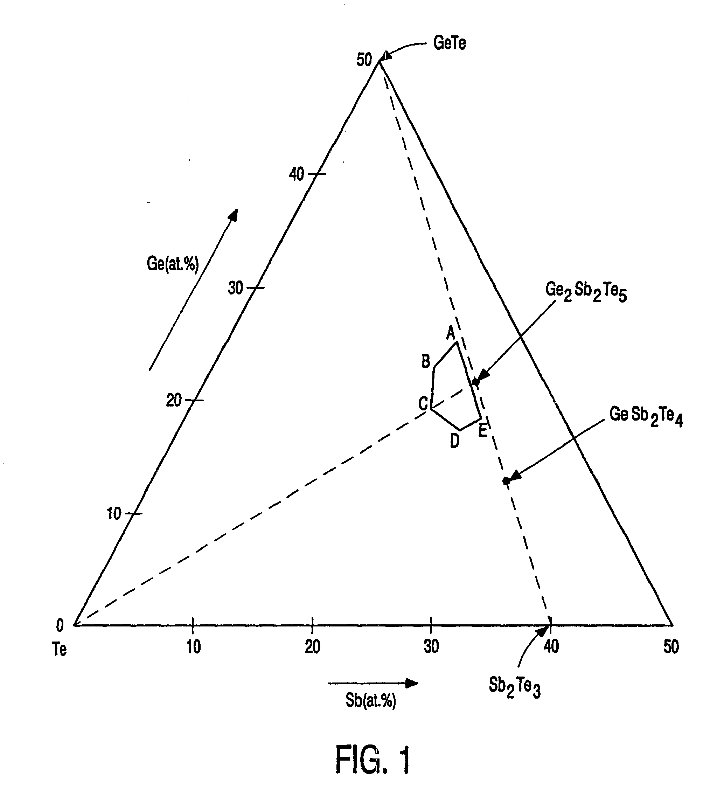

Surprisingly, the alloys within the pentagonal area ABCDE in the triangular ternary Ge-Sb-Te composition diagram (see Figure 1) show a GET-value of 50 ns or shorter, or even below 45 ns. The compositions of these alloys are situated to the left of the tie-line connecting the compositions GeTe and Sb₂Te₃, and show shorter CET-values than the pseudo-binary compound Ge₂Sb₂Te₅ on this tie-line. This is in contrast with the above-mentioned US patent 5,191,565, which teaches that departing from the tie-line GeTe-Sb₂Te₃ would increase the nucleation time from 50 ns for the compound Ge₂Sb₂Te₅ towards 70 ns or more for alloys situated to the left thereof. Outside the area ABCDE the CET-values are more than 50 ns.

Especially useful are alloys having a composition:

(Ge₂Sb₂Te₅)₁₋ₓTeₓ

wherein the molar fraction x satisfies: 0.01 ≤x≤0.43.

These compositions are situated on the tie-line connecting Ge₂Sb₂Te₅ and Te in the ternary composition diagram, but within the pentagonal area ABCDE. Vertex C in Figure 1 corresponds to a composition in which x = 0.43 (Ge_{20.5}Sb_{20.5}Te_{59.0}).

In a further refinement of the medium according to the invention, the value of x satisfies: 0.02 ≤ x ≤ 0.35. With these values of x, CET-values below 45 ns are obtained.

An example of a composition which satisfies this formula is Ge_{21.5}Sb_{21.5}Te_{57.0} (x = 0.23) having a CET of 44 ns.

The first dielectric layer, i.e. the layer between the substrate and the phase-change recording layer, protects the recording layer from humidity and the substrate from thermal damage, and optimizes the optical contrast. To minimize jitter, the thickness of the first dielectric layer is preferably at least 70 nm. In view of the optical contrast, the thickness of this layer is limited to (70+λ/2n) nm, wherein λ is the wavelength of the laser-light beam, and n is the refractive index of the first dielectric layer.

The CET-value of the above-mentioned Ge-Sb-Te alloys depends on the layer thickness of the recording layer. CET decreases rapidly if the layer thickness increases up to 10 nm, and it reaches a value of 50 ns or less if a further increase of the layer thickness takes place. When the recording layer is thicker than 25 nm, CET is essentially independent of the thickness. Above 35 nm the cyclability of the medium is adversely affected. The cyclability of the medium is measured by the relative change of the optical contrast after a large number of DOW-cycles, e.g 10⁵. In every cycle the written amorphous bits are erased by recrystallizing through heating with a laser-light beam while the new amorphous marks are written. In the ideal case, the optical contrast remains unchanged after cycling. The cyclability is practically constant up to a layer thickness of the recording layer of 35 nm. As a result of the combined demands regarding CET and cyclability, the thickness of the recording layer should range between 10 and 35 nm, preferably between 20 and 35 nm, more preferably between 25 and 35 nm. A medium having a recording layer with a thickness between 25 and 35 nm has a constant low jitter during the first 10⁵ DOW-cycles.

An optimum thickness range for the second dielectric layer, i.e. the layer between the recording layer and the metal mirror layer, is found between 10 and 50 nm, preferably between 20 and 40 nm. When this layer is too thin, the thermal insulation between the recording layer and the metal mirror layer is adversely affected. As a result, the cooling rate of the recording layer is increased, which leads to a slow crystallization process and a poor cyclability. The cooling rate will be decreased by increasing the thickness of the second dielectric layer.

The CET-value is not sensitive to the thickness of the metal mirror layer if said thickness is in the range from 20 to 200 nm. But if the metal mirror layer is thinner than 60 nm the cyclability is adversely affected because the cooling rate is too low. If the metal mirror layer is 160 nm or thicker, the cyclability deteriorates further, and the recording and erasing power must be high because of the increased thermal conduction. Preferably the thickness of the metal mirror layer is between 80 and 120 nm.

The first and second dielectric layers may be made of a mixture of ZnS and SiO₂, e.g. (ZnS)₈₀(SiO₂)₂₀. Alternatives are, e.g. SiO₂, TiO₂, ZnS, AlN, Si₃N₄ and Ta₂O₅. Preferably, a carbide is used, like SiC, WC, TaC, ZrC or TiC. These materials give a higher crystallization speed and better cyclability than a ZnS-SiO₂ mixture.

For the metal mirror layer use can be made of metals such as Al, Ti, Au, Ag, Cu, Pt, Pd, Ni, Cr, Mo, W and Ta, including alloys of these metals. Examples of suitable alloys are AlTi, AlCr and AlTa.

Both the reflective layers and the dielectric layers can be provided by vapour deposition or sputtering.

The substrate of the information medium is at least transparent to the laser wavelength, and is made, for example, of polycarbonate, polymethyl methacrylate (PMMA), amorphous polyolefin or glass. In a typical example, the substrate is disc-shaped and has a diameter of 120 mm and a thickness of 0.1, 0.6 or 1.2 mm. When a substrate of 0.6 mm or 1.2 mm is used, the layers can be applied on this substrate starting with the first dielectric layer, recording layer, etc. The laser-light beam enters the stack via the entrance face of the substrate. The layers of the stack on the substrate may also be applied in the reversed order (inverse thin-film phase change stack), i.e. starting with the metal mirror layer, the second dielectric layer, phase change layer, etc. The last dielectric layer (which is now the first dielectric layer) is then provided with an optical quality transparent cover layer or sheet of one of the above materials with a thickness of 0.1 mm (100 µm). The laser-light beam enters the stack via the entrance face of this transparent layer. Such a thin layer allows a high numerical aperture of the objective lens of the laser-light beam, e.g. N.A.=0.85.

Alternatively, the substrate may be in the form of a synthetic resin flexible tape, which is made e.g. from a polyester film. In this way an optical tape will be obtained for use in an optical tape recorder, which is for example based on a fast spinning polygon. In such a device the reflected laser-light beam makes transverse scans across the tape surface.

The surface of the disc-shaped substrate on the side of the recording layer is, preferably, provided with a servotrack which can be scanned optically. This servotrack is often constituted by a spiral-shaped groove and is formed in the substrate by means of a mould during injection moulding or pressing. This groove can be alternatively formed in a replication process in a synthetic resin layer, for example a UV light-cured layer of acrylate, which is separately provided on the substrate. In high-density recording, such a groove has a pitch e.g. of 0.7 - 0.8 µm and a width of 0.5 µm.

Optionally, the outermost layer of the stack is shielded from the environment by means of a protective layer, for example, of UV light-cured poly(meth)acrylate.

High-density recording and erasing can be achieved by using a short-wavelength laser, e.g. with a wavelength of 675 nm or shorter (red to blue).

The phase-change recording layer can be applied to the substrate by vapour depositing or sputtering of a suitable target. The layer thus deposited is amorphous and exhibits a low reflection. In order to constitute a suitable recording layer having a high reflection, this layer must first be completely crystallized, which is commonly referred to as initialization. For this purpose, the recording layer can be heated in a furnace to a temperature above the crystallization temperature of the Ge-Sb-Te alloy, e.g. 180°C. A synthetic resin substrate, such as polycarbonate, can alternatively be heated by a laser-light beam of sufficient power. This can be realized, e.g. in a recorder, in which case the laser-light beam scans the moving recording layer. The amorphous layer is then locally heated to the temperature required for crystallizing the layer, without the substrate being subjected to a disadvantageous heat load.

If desired, an additional thin metal layer M'can be inserted between the substrate and the first dielectric layer, thereby forming a so called M'IPIM-structure. Although the structure becomes more complicated, the additional metal layer increases the cooling rate of the recording layer as well as the optical contrast.

The crystallization speed can be further increased when the above materials are used in a stack II⁺PI⁺IM or II⁺PIM, where I⁺ is a nitride, an oxide, or, preferably, a carbide. In this stack the recording layer P is sandwiched between two additional layers I⁺. The carbide of the first and the second carbide layer is preferably a member of the group SiC, ZrC, TaC, TiC, and WC, which combine an excellent cyclability with a short CET. SiC is a preferred material because of its optical, mechanical and thermal properties; moreover, its price is relatively low. Experiments show that the CET-value of an II⁺PI⁺IM stack is less than 60% of that of an IPIM stack.

The thickness of the additional carbide layer is preferably between 2 and 8 nm. The relatively high thermal conductivity of the carbide will only have a small effect on the stack when this thickness is small, thereby facilitating the thermal design of the stack.

The invention will be elucidated in greater detail by means of exemplary embodiments and with reference to the accompanying drawings, in which
Fig. 1 shows a part of the triangular ternary composition diagram Ge-Sb-Te in atom %,
Fig. 2 shows a schematic cross-sectional view of an optical information medium in accordance with the invention, and
Fig. 3 shows a part of the ternary composition diagram representing Ge (in atom %) and Sb/Te (atomic ratio).

### Examples 1 to 8 (according to the invention).

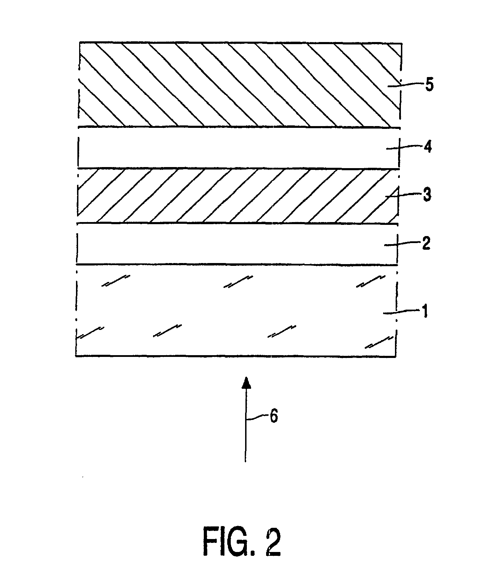

Fig. 2 schematically shows a part of a cross-section of an optical information disc in accordance with the invention. Reference numeral 1 denotes a polycarbonate disc-shaped substrate having a diameter of 120 mm and a thickness of 1.2 mm. The substrate 1 is provided with an IPIM stack of the following structure:
- first dielectric layer (I) 2 of (ZnS)₈₀(SiO₂)₂₀ with a thickness of 90 nm,
- recording layer (P) 3 of an alloy of Ge-Sb-Te with a thickness of 28 nm,
- second dielectric layer (I) 4 of (ZnS)₈₀(SiO₂)₂₀ with a thickness of 25 nm,
- metal mirror layer (M) 5 of Al with a thickness of 100 nm.

All the layers are provided by sputtering. The initial crystalline state of the recording layer 3 is obtained by heating the as-deposited amorphous alloy in a recorder, by which the recording layer is heated by a continuous laser-light beam above its crystallization temperature.

A laser-light beam for recording, reproducing and erasing of information enters the recording layer 3 *via* the substrate 1. This beam is schematically represented by an arrow 6. The amorphous marks are written with single laser pulses of power P_{w} = 1.25 Pₘ (Pₘ= melting threshold power) and duration 100 ns. The erase power is P_{w}/2.

Table 1 summarises the results of examples according to the invention, wherein the composition of the Ge-Sb-Te alloy has been varied.

**Table 1**

| Example | CET (ns) | Ge (at.%) | Sb (at.%) | Te (at.%) |
|---|---|---|---|---|
| 1 | 48 | 23.70 | 20.48 | 55.82 |
| 2 | 45 | 22.80 | 20.89 | 56.31 |
| 3 | 47 | 23.90 | 19.69 | 56.41 |
| 4 | 46 | 22.05 | 21.34 | 56.61 |
| 5 | 44 | 21.55 | 21.55 | 56.90 |
| 6 | 48 | 20.80 | 21.60 | 57.60 |
| 7 | 46 | 20.40 | 22.29 | 57.31 |
| 8 | 47 | 22.50 | 21.58 | 55.92 |

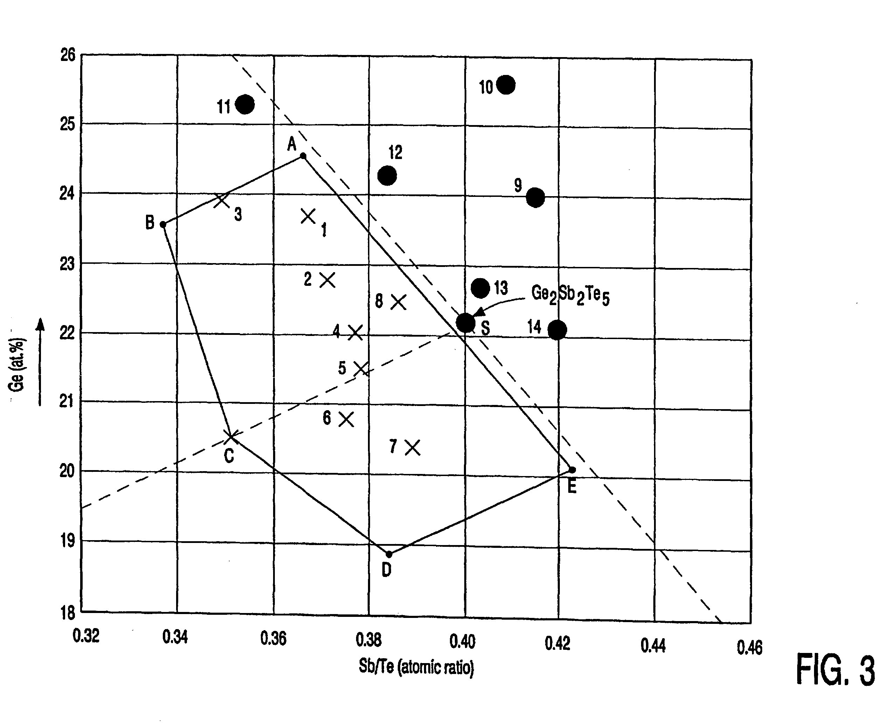

The examples 1 to 8 are situated within the pentagonal area ABCDE in Figure 1 and in Figure 3. The vertices of the pentagon A, B, C, D and E represent alloys with compositions as indicated in Claim 1. Figure 1 is a part of the complete triangular ternary composition diagram Ge-Sb-Te. The diagram has the vertices Te (100% Te), the compound GeTe (50% Ge, 50% Te, 0% Sb), and the composition 0% Ge, 50% Sb, 50% Te. The compound Ge₂Sb₂Te₅ (Ge_{22.2}Sb_{22.2}Te_{55.6} in atomic percentages) is situated on the tie-line (dashed line) connecting the compounds GeTe and Sb₂Te₃.

Figure 3 shows an enlarged composition diagram in a different format. The vertical axis indicates the Ge-content (in at.%), whereas the horizontal axis represents the Sb/Te atomic ratio. This Figure shows a part of the tie-lines from Figure 1, as well as the compound Ge₂Sb₂Te₅. Vertex point C is situated on the tie-line connecting Te and Ge₂Sb₂Te₅. The examples 1 to 8 according to the invention are indicated with a cross x in the area of pentagon ABCDE.

The lowest CET-values are situated on the tie-line (dashed line) connecting Te and Ge₂Sb₂Te₅, but within the area of pentagon ABCDE, such as example 5 in Table 1. By the addition of Te to pure Ge₂Sb₂Te₅, the composition shifts from Ge₂Sb₂Te₅ towards Te along the tie-line connecting these two end-points, corresponding with the composition: (Ge₂Sb₂Te₅)₁₋ₓTeₓ. If x =0.00, i.e. the pure compound Ge₂Sb₂Te₅, the GET-value amounts to 53 ns. After a small addition of Te (x = 0.01), the CET-value drops below 50 ns. CET remains below 50 ns until x = 0.43 (Ge_{20.5}Sb_{20.5}Te_{59.0}, in atomic percentages), which corresponds to vertex point C in Figures 1 and 3. CET remains even below 45 ns, if x is between 0.02 and 0.35. Example 5 (x=0.23) is situated on this tie-line.

### Comparative examples 9 to 14 (not according to the invention).

Table 2 summarises the results of examples not according to the invention.

**Table 2**

| | CET (ns) | Ge (at.%) | Sb (at.%) | Te (at.%) |
|---|---|---|---|---|
| 9 | 66 | 24.00 | 22.29 | 53.71 |
| 10 | 125 | 25.60 | 21.60 | 52.80 |
| 11 | 60 | 25.30 | 19.53 | 55.17 |
| 12 | 63 | 24.30 | 21.00 | 54.70 |
| 13 | 56 | 22.70 | 22.20 | 55.10 |
| 14 | 54 | 22.10 | 23.00 | 54.90 |

These examples show a CET-value higher than 50 ns. The compositions are situated outside the area of pentagon ABCDE, and are indicated by a dot • in Figure 3.

According to the invention, a rewritable phase-change optical information medium is provided with a CET-value of 50 ns or less, which is suitable for direct overwrite and high-speed recording, such as DVD+RW, DVD-red and -blue.

## Claims

1. A rewritable optical information medium for high-speed recording by means of a laser-light beam, said medium comprising a substrate carrying a stack of layers, which stack comprises, in this order, a first dielectric layer, a recording layer of a phase-change material comprising an alloy consisting of Ge, Sb and Te, a second dielectric layer and a metal mirror layer, **characterized in that**
- the alloy has a composition defined by an area in the ternary composition diagram Ge-Sb-Te in atomic percentages, said area being of pentagonal shape having the following vertices:
Ge_{24.6}Sb_{20.2}Te_{55.2} (A)
Ge_{23.5}Sb_{19.2}Te_{57.3} (B)
Ge_{20.5}Sb_{20.5}Te_{59.0} (C)
Ge_{18.8}Sb_{22.6}Te_{58.6} (D)
Ge_{20.1}Sb_{23.7}Te_{56.2} (E);
- the recording layer having a thickness of 10 to 35 nm;
- the second dielectric layer having a thickness of 10 to 50 nm;
- the metal mirror layer having a thickness of 60 to 160 nm.

2. An optical information medium as claimed in Claim 1, **characterized in that** the alloy has the composition:
(Ge₂Sb₂Te₅)₁₋ₓTeₓ,
wherein the molar fraction x satisfies:
0.01 ≤ x ≤ 0.43, preferably 0.02 ≤ x ≤ 0.35.

3. An optical information medium as claimed in Claim 1, **characterized in that** the recording layer has a thickness of 20 to 35 nm, preferably 25 to 35 nm.

4. An optical information medium as claimed in Claim 1, **characterized in that** the second dielectric layer has a thickness of 20 to 40 nm.

5. An optical information medium as claimed in Claim 1, **characterized in that** the metal mirror layer has a thickness between 80 and 120 nm.

6. An optical information medium as claimed in Claim 1, **characterized in that** the metal mirror layer comprises at least one of the metals selected from a group consisting of Al, Ti, Au, Ag, Cu, Pt, Pd, Ni, Cr, Mo, W and Ta, including alloys of these metals.

7. An optical information medium as claimed in Claim 1, **characterized in that** the substrate is a disc or a tape.

8. An optical information medium as claimed in Claim 1, **characterized in that** the recording layer is sandwiched between two additional carbide layers, both having a thickness between 2 and 8 nm.

9. Use of an optical medium as claimed in any one of the preceding Claims for high-speed recording, the relative velocity between the laser-light beam and the medium being at least 7.2 m/s.

## Patentansprüche

1. Überschreibbares, optisches Informationsmedium zur Hochgeschwindigkeitsaufzeichnung mit Hilfe eines Laserstrahls, wobei das Medium ein Substrat aufweist, welches übereinander angeordnete Schichten in der folgenden Reihenfolge trägt: eine erste dielektrische Schicht, eine Aufzeichnungsschicht aus einem Phasenveränderungsmaterial mit einer Legierung aus Ge, Sb und Te, eine zweite dielektrische Schicht sowie eine Metallspiegelschicht, **dadurch gekennzeichnet, dass**
die Legierung eine Zusammensetzung, welche durch eine Fläche in dem ternären Zusammensetzungsdiagramm Ge-Sb-Te in Atomprozent definiert ist, vorsieht, wobei die Fläche eine pentagonale Form mit den folgenden Eckpunkten aufweist:
Ge_{24.6}Sb_{20.2}Te_{55.2} (A)
Ge_{23.5}Sb_{19.2}Te_{57.3} (B)
Ge_{20.5}Sb_{20.5}Te_{59.0} (C)
Ge_{18.8}Sb_{22.6}Te_{58.6} (D)
Ge_{20.1}Sb_{23.7}Te_{56.2} (E),
- wobei die Aufzeichnungsschicht eine Dicke von 10 bis 35 nm aufweist;
- wobei die zweite dielektrische Schicht eine Dicke von 10 bis 50 nm aufweist;
- wobei die Metallspiegelschicht eine Dicke von 60 bis 160 nm aufweist.

2. Optisches Informationsmedium nach Anspruch 1, **dadurch gekennzeichnet, dass** die Legierung die Zusammensetzung (Ge₂Sb₂Te₅)₁₋ₓTeₓ aufweist, wobei der Molenbruch x entspricht:
0,01 ≤ x < 0,43, vorzugsweise 0,02 ≤ x ≤ 0,35.

3. Optisches Informationsmedium nach Anspruch 1, **dadurch gekennzeichnet, dass** die Aufzeichnungsschicht eine Dicke von 20 bis 35 nm, vorzugsweise 25 bis 35 nm, aufweist.

4. Optisches Informationsmedium nach Anspruch 1, **dadurch gekennzeichnet. dass** die zweite dielektrische Schicht eine Dicke von 20 bis 40 nm aufweist.

5. Optisches Informationsmedium nach Anspruch 1, **dadurch gekennzeichnet, dass** die Metallspiegelschicht eine Dicke zwischen 80 und 120 nm aufweist.

6. Optisches Informationsmedium nach Anspruch 1, **dadurch gekennzeichnet, dass** die Metallspiegelschicht zumindest eines der Metalle, welche der aus Al, Ti, Au, Ag, Cu, Pt, Pd, Ni, Cr, Mo, W und Ta, einschließlich Legierungen aus diesen Metallen, bestehenden Gruppe angehören, aufweist.

7. Optisches Informationsmedium nach Anspruch 1, **dadurch gekennzeichnet, dass** das Substrat durch eine Platte oder ein Band dargestellt ist.

8. Optisches Informationsmedium nach Anspruch 1, **dadurch gekennzeichnet, dass** die Aufzeichnungsschicht zwischen zwei zusätzlichen Carbidschichten, welche beide eine Dicke zwischen 2 und 8 nm aufweisen, angeordnet ist.

9. Verwendung eines optischen Mediums nach einem der vorangegangenen Ansprüche zur Hochgeschwindigkeitsaufzeichnung, wobei die relative Geschwindigkeit zwischen dem Laserstrahl und dem Medium mindestens 7,2 m/s beträgt.

## Revendications

1. Support d'information optique réinscriptible pour enregistrement à grande vitesse au moyen d'un faisceau de lumière laser, ledit support comprenant un substrat supportant une superposition de couches, laquelle superposition comprend, dans cet ordre, une première couche diélectrique, une couche d'enregistrement d'un matériau à variation de phase comprenant un alliage constitué de Ge, Sb et Te, une deuxième couche diélectrique et une couche miroir en métal,
**caractérisé en ce que** l'alliage a une composition définie par une zone dans le diagramme de composition ternaire Ge-Sb-Te, en pourcentages atomiques, ladite zone étant de forme pentagonale avec les sommets suivants :
Ge_{24.6}Sb_{20.2}Te_{55.2} (A)
Ge_{23.5}Sb_{19.2}Te_{57.3} (B)
Ge_{20.5}Sb_{20.5}Te_{59.0} (C)
Ge_{18.8}Sb_{22.6}Te_{58.6} (D)
Ge_{20.1}Sb_{23.7}Te_{56.2} (E);
- la couche d'enregistrement ayant une épaisseur de 10 à 35 nm;
- la deuxième couche diélectrique ayant une épaisseur de 10 à 50 nm;
- la couche miroir en métal ayant une épaisseur de 60 à 160 nm.

2. Support d'information optique suivant la revendication 1, **caractérisé en ce que** l'alliage a la composition suivante :
(Ge₂Sb₂Te₅)₁₋ₓTeₓ,
dans laquelle la fraction molaire x satisfait à : 0,01 ≤ x < 0,43, de préférence 0,02 ≤ x ≤ 0,35.

3. Support d'information optique suivant la revendication 1, **caractérisé en ce que** la couche d'enregistrement présente une épaisseur de 20 à 35 nm, de préférence de 25 à 35 nm.

4. Support d'information optique suivant la revendication 1, **caractérisé en ce que** la deuxième couche diélectrique présente une épaisseur de 20 à 40 nm.

5. Support d'information optique suivant la revendication 1, **caractérisé en ce que** la couche miroir en métal présente une épaisseur de 80 à 120 nm.

6. Support d'information optique suivant la revendication 1, **caractérisé en ce que** la couche miroir en métal comprend au moins l'un des métaux sélectionnés parmi un groupe constitué de Al, Ti, Au, Ag, Cu, Pt, Pd, Ni, Cr, Mo, W et Ta, y compris des allliages de ces métaux.

7. Support d'information optique suivant la revendication 1, **caractérisé en ce que** le substrat est un disque ou une bande.

8. Support d'information optique suivant la revendication 1, **caractérisé en ce que** la couche d'enregistrement est prise en sandwich entre deux couches de carbure supplémentaires, présentant toutes deux une épaisseur comprise entre 2 et 8 nm.

9. Utilisation d'un support optique suivant l'une quelconque des revendications précédentes pour un enregistrement à grande vitesse, la vitesse relative entre le faisceau de lumière laser et le support étant d'au moins 7,2 m/s.
